(19) Europäisches Patentamt
European Patent Office
Office européen des brevets

(11) **EP 2 440 784 B1**

(12) **EUROPEAN PATENT SPECIFICATION**

(45) Date of publication and mention
of the grant of the patent:
**23.10.2019 Bulletin 2019/43**

(21) Application number: **10786902.6**

(22) Date of filing: **11.06.2010**

(51) Int Cl.:
*F04B 51/00* (2006.01)     *F04B 15/02* (2006.01)
*F04B 49/06* (2006.01)     *F04D 7/04* (2006.01)
*F04D 15/00* (2006.01)

(86) International application number:
**PCT/US2010/038281**

(87) International publication number:
**WO 2010/144782 (16.12.2010 Gazette 2010/50)**

(54) **METHOD AND APPARATUS FOR PREDICTING MAINTENANCE NEEDS OF A PUMP BASED AT LEAST PARTLY ON PUMP PERFORMANCE ANALYSIS**

VERFAHREN UND VORRICHTUNG ZUR VORHERSAGE DES WARTUNGSBEDARFS EINER PUMPE AUF BASIS MINDESTENS EINER PUMPENLEISTUNGSANALYSE

PROCÉDÉ ET APPAREIL POUR PRÉDIRE DES BESOINS DE MAINTENANCE D'UNE POMPE SUR LA BASE AU MOINS EN PARTIE D'UNE ANALYSE DE PERFORMANCE DE POMPE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 US 186502 P**

(43) Date of publication of application:
**18.04.2012 Bulletin 2012/16**

(73) Proprietor: **Cidra Corporate Services, Inc.**
**Wallingford, CT 06492 (US)**

(72) Inventors:
• **VAN DER SPEK, Alex**
**NL-3052 ZN Rotterdam (NL)**
• **MARON, Robert J.**
**Middletown**
**Connecticut 06457 (US)**
• **O'KEEFE, Christian Victor**
**Durham**
**Connecticut 06422 (US)**
• **ROTHMAN, Paul J.**
**Windsor**
**Connecticut 06095 (US)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
EP-A2- 1 589 391          WO-A1-2006/039743
WO-A2-2006/099622     US-A- 5 457 626
US-A- 6 092 598          US-B1- 6 735 630
US-B1- 6 735 630          US-B2- 6 882 960
US-B2- 6 882 960

EP 2 440 784 B1

**Description**

BACKGROUND OF THE INVENTION

1. Field of the Invention

The field of the invention relates to a technique predicting maintenance needs of a pump, including large diameter slurry pumps.

2. Description of Related Art

Pumps need to be maintained during the course of their lifetime. Pumps that are well maintained have a tendency to operate longer and more efficiently than pumps that are not well maintained.

By way of example, maintenance may be carried out to prolong the lifetime of a pump, or to increase the efficiency of the pump, or both. An example of lifetime prolonging maintenance is the dynamic balancing of impellers which reduces vibration and thereby increases the lifetime of a pump. An example of maintenance geared to increase efficiency is the replacement of worn parts.

US 6 882 960 B2 discloses a power pump performance analysis system which includes a signal processor connected to pressure sensors for sensing pressures in the cylinder chambers and inlet and discharge piping of a single or multi-cylinder pump. Pump speed and piston position are determined, and pump vibration, fluid temperatures, and power input may also be measured by sensors connected to the processor. Performance analyses, including determination of pump volumetric efficiency, mechanical efficiency, suction and discharge valve sealing delay, valve and piston seal leakage, flow induced pressure variations, acceleration induced pressure detection, hydraulic resonance detection and pulsation dampener performance may be measured and selected parameters displayed on a visual display connected to the processor directly or via a network.

US 6 735 630 B1 relates to Wireless Integrated Network Sensor Next Generation nodes which provide distributed network and Internet access to sensors, controls, and processors that are deeply embedded in equipment, facilities, and the environment. For example, in an industrial monitoring application, vibrations in large pumps are to be monitored for abnormalities. Diagnostic or prognostic algorithms may be run on a database, or a human expert may view the data from a remote location using standard Web browsing tools. In this way, problems may be quickly identified without the need for experts to travel to a remote site.

EP 1 589 391 A2 relates to a method and system for operating a facility having a plurality of equipment combinations wherein each equipment combination is operating interactively with at least one of another of the plurality of equipment combination.

WO 2006/099622 A2 discloses monitoring pump performance parameters for a reciprocating pump including pulsation energy, temperature energy, solids, Miller number and chemical energy and the like to at least periodically compute a total energy number over the operating life of the pump.

WO 2006/039743 A1 discloses a method of estimating costs associated with a fluid pumping system, the method including calculating wear-induced energy costs corresponding to wear-induced efficiency losses based at least in part on increased operating speeds or the increased operating times.

It is known that an economic trade-off exists between increasing the efficiency of a pump, thereby reducing power usage, and decreasing maintenance needs and thus lowering the cost of non-productive down time and other costs related to performing the maintenance, including the cost of the parts, the man hours to perform the maintenance, etc.. This trade-off exists, e.g., because the maximum efficiency of a pump can be achieved by reducing the pump's internal clearances and thereby making the internal pressure seal of the pump tighter. However, in doing so, the shear rates in the clearance spaces typically will increase, and thus the wall friction will typically increase as well leading to increased wear when the pumped fluids contain abrasive particulate material.

There is a need for a better way for maintaining a pump, including a better way for predicting the maintenance needs of a pump, including, e.g., large diameter slurry pumps.

SUMMARY OF THE INVENTION

Predicting maintenance needs of a pump, including, e.g., large diameter slurry pumps, is a task that may be approached using a variety of tools and techniques. The present invention looks to optimize and maintain the trade-off that exists between increasing the efficiency of a pump, thereby reducing power usage, and decreasing maintenance needs and thus lowering non-productive down time and other costs related to performing the maintenance. In order to do so, the present invention provides a new way to monitor the decrease in pump efficiency with wear, such that it becomes feasible to adjust the maintenance interval to the rate of wear, and vice versa the wear rate to the maintenance interval, so that the total cost of ownership is substantially minimized. Adjusting the rate of wear in a pump, of course, can be accomplished by increasing or decreasing internal clearances using a predictable maintenance schedule based at least partly on historical data that is tracked over time.

For example, one way of tracking pump efficiency is to compare over time, the hydraulic power generated by the pump and the electric power consumed by the motor driving the pump. Assuming that bearings and seals are well maintained and lubricated where necessary the wear of these elements might be negligible compared to the wear of wetted pump parts subjected to abrasive internal flow. If this assumption holds, then the ratio of hydraulic to electric power can be a useful number or indicator to track as it will allow striking a balance between efficiency and pump wear so as to make the cost of operating the pump as low as possible.

The present invention provides a new way to track pump efficiency over time and is based at least partly on a technique developed to track and analyze pump efficiency over a long (238 days) time period for two large diameter centrifugal slurry pumps feeding a battery of cyclone separators. The method is reasonably straightforward in theory and in its implementation, although it requires detailed attention to data quality.

According to some embodiments, the present invention may be implemented in the form of a signal processor comprising one or more signal processor modules configured to:

compare signaling containing information about historical data related to the performance of a pump; and

provide corresponding signaling containing information about predicted maintenance needs of the pump on a real time basis based at least partly on the signaling compared containing information about the historical data related to the performance of the pump.

According to some embodiments of the present invention, the one or more signal processor modules may be configured to compare over time the hydraulic power generated by the pump and electric power consumed by a motor driving the pump, including tracking a ratio of hydraulic to electric power.

According to some embodiments of the present invention, the one or more signal processor modules may be configured to predict maintenance needs based on an algorithm that takes into account a trade-off between the cost of power consumed by the motor driving the pump and the cost associated with the pump maintenance in order to substantially minimize the total cost of operating the pump.

According to some embodiments of the present invention, the corresponding signaling containing information predicting maintenance needs of the pump may include information about one or more of the following: dynamically adjusting pump clearances, dynamically balancing an impeller and replacing worn parts.

According to some embodiments of the present invention, the historical data related to the performance of the pump may include the discharge flow and pressure, intake level, fluid density, pump speed, or motor current, or some combination thereof.

According to some embodiments of the present invention, the one or more signal processor modules may be configured to use non-dimensional quantities to infer the performance of the pump and the trending of the efficiency of the pump, where the non-dimensional quantities may include: the head coefficient, the flow coefficient, the efficiency, the power coefficient, the speed coefficient and the specific speed of the pump.

According to some embodiments of the present invention, the one or more signal processor modules may be configured to adjust the maintenance interval to the rate of wear, or vice versa, so that the total cost of operating the pump is substantially minimized.

According to some embodiments of the present invention, the one or more signal processor modules may be configured to receive the signaling containing information about historical data related to the performance of the pump; to store the signaling containing information about historical data related to the performance of the pump in a historical data database; or both.

According to some embodiments of the present invention, the one or more signal processor modules may be configured to analyze the signaling containing information about historical data related to the performance of the pump using a n-day moving window, e.g., a 2-day moving window.

According to some embodiments of the present invention, the one or more signal processor modules may be configured to receive information about maintenance performed on the pump, and to store associated signaling containing information about the maintenance performed in the historical data database.

According to some embodiments of the present invention, the one or more signal processor modules may be configured to use an algorithm that is based at least partly on prolonging the lifetime of the pump, increasing the efficiency of the pump, or both.

According to some embodiments of the present invention, the one or more signal processor modules may be configured to predict maintenance needs based at least partly on an algorithm that takes into account that the fact that maximum efficiency of the pump may only be achieved by reducing the pump's internal clearances and thereby making the internal pressure seal of the pump tighter, and that by doing so the shear rates in the clearance spaces increase and thus the wall friction will increase as well leading to increased wear when the pumped fluids contain abrasive particulate material.

According to some embodiments of the present invention, the one or more signal processor modules may be configured to extrapolate information related to the performance of the pump to a Best Efficiency Point, thus providing an efficiency measure at a common point.

The present invention may also be implemented in the form of a method comprising: comparing signaling containing information about historical data related to the performance of a pump; and providing corresponding signaling containing information about predicted maintenance needs of the pump on a real time basis based at least partly on the signaling compared containing information about the historical data related to the performance of the pump. According to some embodiments, the method may be implemented to include one or more of the features set forth above in relation to the signal processor.

According to some embodiments, the present invention may be implemented in apparatus taking the form of a computer-readable storage medium having computer-executable components for performing the aforementioned method, when executed on a signal processor running on a computer device.

BRIEF DESCRIPTION OF DRAWING

The drawing, which includes Figures 1(a) - 20, is briefly described below:

Figure 1(a) is a block diagram of a signal processor according to some embodiments of the present invention; and Figure 1(b) is a graph of value (e.g. raw, stored and interpolated) versus a time index showing an example of data storage and retrieval in a data historian.

Figure 2 includes Figures 2(a) and 2(b) showing examples of a raw timeseries of data (in minutes) related to pump 1.

Figure 3 includes Figures 3(a) and 3(b) showing examples of filtered raw timeseries of data in relation to time (in minutes) related to pump 1.

Figure 4 includes Figures 4(a) through 4(f) showing flow summary statistics related to pump 1, including statistical variables like count, means, median, max, StDev or min versus the number of cyclones.

Figure 5 shows pairwise correlations related to a pump 1.

Figure 6 shows plots of pressure (PSI) versus flow rate (GPM) related to a pump 1.

Figure 7 shows a co factor plot of pressure (PSI) versus flow rate (GPM) in relation to oversized and the number of cyclones related to a pump 1.

Figure 8 includes Figures 8(a) and 2(b) showing examples of a raw timeseries of data (in minutes) related to pump 2.

Figure 9 includes Figures 9(a) and 3(b) showing examples of filtered raw timeseries of data in relation to time (in minutes) related to pump 2.

Figure 10 includes Figures 10(a) through 4(f) showing flow summary statistics related to pump 1, including respectively statistical variables like count, means, median, max, StDev or min versus the number of cyclones.

Figure 11 shows pairwise correlations related to a pump 2.

Figure 12 shows plots of pressure (PSI) versus flow rate (GPM) related to a pump 2.

Figure 13 shows a co factor plot of pressure (PSI) versus flow rate (GPM) in relation to oversized and the number of cyclones related to a pump 2.

Figure 14 shows a schematic layout of a pump, a sump and a battery piping.

Figure 15 includes Figures 15(a) through 15(d) showing plots of a good example related to pump 1, including Figure 15(a) showing head coefficient Ch versus flow coefficient Cf in a dimensionless pump curve; Figure 15(b) showing pump efficiency versus flow coefficient Cf in an efficiency curve; Figure 15(c) showing power coefficient Cp versus speed coefficient Cs in a dimensionless speed curve; and Figure 15(d) showing specific speed Ns versus speed coefficient Cs in a specific speed curve.

Figure 16 includes Figures 16(a) through 16(d) showing plots of a bad example related to pump 1, including Figure 16(a) showing head coefficient Ch versus flow coefficient Cf in a dimensionless pump curve; Figure 16(b) showing pump efficiency versus flow coefficient Cf in an efficiency curve; Figure 16(c) showing power coefficient Cp versus speed coefficient Cs in a dimensionless speed curve; and Figure 16(d) showing specific speed Ns versus speed coefficient Cs in a specific speed curve.

Figure 17 includes Figures 17(a) through 17(d) showing plots of a good example related to pump 2, including Figure 17(a) showing head coefficient Ch versus flow coefficient Cf in a dimensionless pump curve; Figure 17(b) showing pump efficiency versus flow coefficient Cf in an efficiency curve; Figure 17(c) showing power coefficient Cp versus speed coefficient Cs in a dimensionless speed curve; and Figure 17(d) showing specific speed Ns versus speed coefficient Cs in a specific speed curve.

Figure 18 includes Figures 18(a) through 18(d) showing plots of a bad example related to pump 2, including Figure 18(a) showing head coefficient Ch versus flow coefficient Cf in a dimensionless pump curve; Figure 18(b) pump efficiency versus flow coefficient Cf in an efficiency curve; Figure 18(c) power coefficient Cp versus speed coefficient Cs in a dimensionless speed curve; and Figure 18(d) specific speed Ns versus speed coefficient Cs in a specific speed curve.

Figure 19 includes Figures 19(a) showing a plot re a final result of best efficiency point (BEP) versus time (in months) related to pump 1, and Figures 19(b) showing a plot re a final result of best efficiency point (BEP) versus time (in months) related to pump 2.

Figure 20 includes Figures 20(a) through 20(d) showing plots re an inspection of spike data related to pump 2, including Figure 20(a) showing head coefficient Ch versus flow coefficient Cf in a dimensionless pump curve; Figure 20(b) showing pump efficiency versus flow coefficient Cf in an efficiency curve; Figure 20(c) showing power coefficient Cp versus speed coefficient Cs in a dimensionless speed curve; and Figure 20(d) showing specific speed Ns versus speed coefficient Cs in a specific speed curve.

DESCRIPTION OF BEST MODE OF THE INVENTION

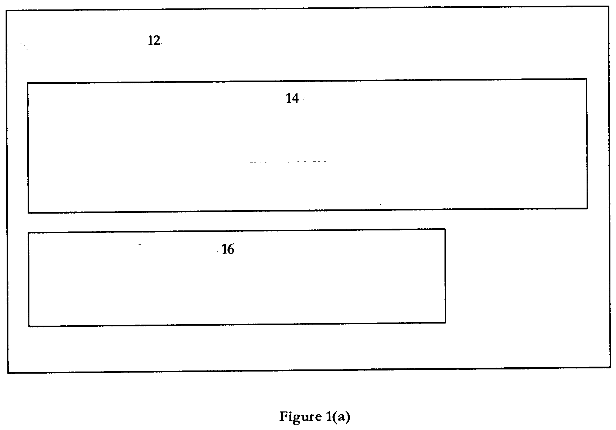

Figure 1(a) shows a signal processor 12 comprising one or more signal processor modules 14 and one or more other modules 16. The one or more signal processor modules 12 is configured to compare signaling containing information about historical data related to the performance of a pump; and provide corresponding signaling containing information about predicted maintenance needs of the pump on a real time basis based at least partly on the signaling compared containing information about the historical data related to the performance of the pump. The one or more other modules 16 is configured to cooperate with the one or more signal processor modules 12 and perform other processor-related functions that do not form part of the underlying invention, including input/output functionality, memory functionality, etc.

By way of example, the one or more signal processor modules 12 may be configured to compare over time one signal containing information about the hydraulic power generated by the pump and another signal containing information about electric power consumed by a motor driving the pump, including tracking a ratio of hydraulic to electric power. Techniques for determining the hydraulic power generated by the pump and the electric power consumed by the motor driving the pump, as well as comparing the associated signaling as a whole, are known in the art, and the scope of the invention is not intended to be limited to the manner in which the hydraulic and electric power related to the pump are determined or compared. Moreover, a detailed description of pump hydraulics, as well as pump data consistency, pump performance analysis, etc., is set forth herein, by way of example, that may be used to make these determinations in whole or in part.

Based at least partly on the aforementioned comparison, the one or more signal processor modules 14 may also be configured to predict maintenance needs of the pump based at least partly on an algorithm or procedure that takes into account a trade-off between the cost of power consumed by the motor driving the pump and the cost associated with the pump maintenance in order to substantially minimize the total cost of operating the pump over the course of its lifetime. For example, the algorithm may be provided the cost of power, e.g. the cost of electricity per kilowatt hour. The algorithm may also be provided the cost of a variety of factors related to or associated with the pump maintenance needed, including the cost of various parts that may be replaced, e.g. the impeller, seals, etc., the cost related to one or more adjustments of parameters like impeller clearance that may be needed, as well as the cost of performing the maintenance, including the production downtime and man hours to perform the maintenance needed, e.g. replacing one or more parts or adjusting one or more parameters. The cost of production down time may include, e.g., the cost of product not being made or processed while the maintenance is performed. The cost of power and the variety of factors may be stored in a database, and updated from time to time as the cost changes, e.g. due to inflation. With this information, the algorithm or procedure may be implemented to determine the power consumed by the motor driving the pump based at least partly on its current configuration, and to determine if it is likely to be cost effective to replace a worn down part or make an adjust based at least partly on the current pump performance and the likelihood of an improved pump performance that may result from the maintenance being performed. A person skilled in the art can formulate such an algorithm or procedure to implement the present invention consistent with that shown and described herein without undue experimentation, and the scope of the invention is not intended to be limited to any particular type or kind of implementation.

The corresponding signaling containing information predicting maintenance needs of the pump may include, by way of example, information about one or more of the following: dynamically adjusting pump clearances, dynamically balancing an impeller and replacing worn parts. However, the scope of the invention is not intended to be limited to the type or kind of part being replaced, or the type or kind of adjustment being made when the predicted maintenance needs are performed, and is intended to include other types or kinds of parts or adjustments either now known or later developed in the future.

The historical data related to the performance of the pump may include, by way of example, the discharge flow and pressure, intake level, fluid density, pump speed, or motor current, or some combination thereof. Moreover, the detailed description of the pump hydraulics, pump data consistency, pump performance analysis, etc., set forth herein may be used to make the determinations and/or comparisons in whole or in part based at least partly on the historical data. However, the scope of the invention is not intended to be limited to the type or kind of historical data being used to make the predicted maintenance needs, and is intended to include other types or kinds of historical data either now known or later developed in the future.

The one or more signal processor modules 14 may be configured to use non-dimensional quantities to infer the performance of the pump and the trending of the efficiency of the pump, where the non-dimensional quantities may include: the head coefficient, the flow coefficient, the efficiency, the power coefficient, the speed coefficient and the specific speed of the pump. Moreover, the detailed description of pump hydraulics, pump data consistency, pump performance analysis, set forth herein may be used to make the determinations and/or comparisons in whole or in part based at least partly on the historical data. However, the scope of the invention is not intended to be limited to the type or kind of non-dimensional quantities being used to make the predicted maintenance needs, and is intended to include other types or kinds of non-dimensional quantities either now known or later developed in the future.

The one or more signal processor modules 14 may be configured to adjust the maintenance interval to the rate of wear, or vice versa, so that the total cost of operating the pump is substantially minimized. The adjustment of the maintenance interval may be implement based at least partly on an algorithm that takes into account a relationship between, e.g., the maintenance interval of a particular part that needs to be maintained and the rate of wear of the particular part, or vice versa, so that the total cost of operating the pump is substantially minimized. Information related to these parameters may be provided to the signal processor, stored in a historical database, etc., and used to formulate or determine the adjustment to the maintenance interval or the rate of wear, or vice versa, so that the total cost of operating the pump is substantially minimized. Embodiments are also envisioned in which these parameters are stored in a database and a table look-up technique is used. A person skilled in the art can formulate such an algorithm or procedure to implement the present invention consistent with that shown and described herein without undue experimentation, and the scope of the invention is not intended to be limited to any particular type or kind of implementation.

The one or more signal processor modules 14 may be configured to receive the signaling containing information about historical data related to the performance of the pump; to store the signaling containing information about historical data related to the performance of the pump in a historical data database; or both. However, the scope of the invention is not intended to be limited to the manner in which the signaling is received or stored, and is intended to include other types, kinds or techniques for receiving or storing signaling either now known or later developed in the future.

The corresponding signal containing information predicting maintenance needs of the pump may take the form of audio or visual information, including a report that can be printed out on a printing device or displayed on a video monitor, as well as an audio announcement or warning. The corresponding signal containing information predicting maintenance needs of the pump may also take the form of a wireless signal that is transmitted to a remote location to further processed, and may also take the form signaling provided to a website on the Internet that can be downloaded by a remote computer desktop terminal, laptop, personal digital assistant (PDA), Blackberry device, cell phone, etc.

## The One or More Signal Processing Modules 14

Signal processing technology is known and available in the art for implementing the functionality of the one or more signal processing modules 14. By way of example, the functionality of the one or more signal processor modules 14 may be implemented using hardware, software, firmware, or a combination thereof. In a typical software implementation, the one or more signal processor modules 14 would include one or more microprocessor-based architectures having a microprocessor, a random access memory (RAM), a read only memory (ROM), input/output devices and control, data and address buses connecting the same. A person skilled in the art would be able to program an algorithm or procedure in such a microprocessor-based implementation to perform the functionality described herein without undue experimentation. The scope of the invention is not intended to be limited to any particular type or kind of signal processing technology either now known or later developed in the future, and embodiments are envisioned using other types or kinds of signal processing technology either now known or later developed in the future.

The scope of the invention is intended to include the signal processor module 14 being implemented as a stand alone component or module or implemented as multiple modules.

The functionality of the one or more modules may also be implemented as apparatus taking the form of a computer-readable storage medium having computer-executable components for performing the steps of the aforementioned method or technique described herein.

## SUMMARY

The following is a summary of a detailed description of a pump performance analysis that was carried out on two large diameter cyclone feed pumps. The detailed description is set forth below in sections 1 through 5.

The analysis was carried out using historical data of discharge flow and pressure, intake sump level, fluid density, pump speed and motor current. Six non-dimensional quantities, the head coefficient, the flow coefficient, the efficiency, the power coefficient, the speed coefficient and the specific speed of the pump were arranged in a four plot to analyse and infer pump performance and efficiency trending. The analysis was carried out using a 2 day moving time window over a period of some 240 days spanning one impeller change of each pump.

For pump 1 a clear downward trend in the efficiency was found during the pre-impeller change. Post-impeller change in the efficiency is not increased until some time later when a second downward trend was observed. The delayed increase in efficiency after an impeller replacement could be due to pump clearance readjustment.

For pump 2 no clear trend was detected. Post-impeller replacement a slight but significant increase in efficiency was seen.

The performance analysis using non-dimensional quantities may be used on a real time basis in order to trade-off the cost of power (lowest at high efficiency) and the cost of pump maintenance (lowest at low wear rates) by adjusting pump clearances dynamically such that the rate of pump wear (as indicated by a decreasing trend in efficiency) is chosen to minimize the total cost.

## 1. INTRODUCTION

In one particular example, the trade off exists because maximum efficiency of a pump can typically be achieved by reducing the pump's internal clearances and thereby making the internal pressure seal of the pump tighter.

One way of tracking pump efficiency is to compare over time, the hydraulic power generated by the pump and the electric power consumed by the motor driving the pump. Assuming that bearings and seals are well maintained and lubricated where necessary the wear of these might be negligible compared to the wear of wetted pump parts subjected to abrasive internal flow. Based on this assumption, the ratio of hydraulic to electric power can be a useful number or indicator to track as it should allow striking a balance between efficiency and pump wear so as to make the cost of operating the pump as low as possible.

The following describes a way to track pump efficiency over a fairly long (238 days) period for two large diameter centrifugal slurry pumps feeding a battery of cyclone separators. The method is straightforward in theory but in practice it requires detailed attention to data quality.

## 2. PUMP HYDRAULICS.

The purpose of a pump is to increase fluid pressure at a certain rate of flow. Centrifugal pumps achieve this by imparting kinetic energy to the fluid by means of a rotating impeller. Subsequently by decelerating the fluid in the pump's snail house the pressure is increased. The theory of hydro kinetic machinery, including centrifugal pumps is explained in detail by A.C. Walshaw and D.A. Jobson, Mechanics of Fluids, 3rd printing, Longmans, London, 1967.

### 2.1. Dimensionless numbers

[0051] As a measure of a pump's efficiency the head coefficient $C_H$ is often used which is a dimensionless number defined as:

$$C_H = \frac{\Delta p}{\rho(\omega D)^2} \qquad \{1\}.$$

In this equation $\Delta p$ is the pressure differential created, $\rho$ the density of the fluid, $\omega$ the circle frequency of the impeller and D the diameter of the impeller. Under ideal conditions the fluid at the tip of the impeller leaves the impeller at the tangential speed of the impeller which is equal to the product of the circle frequency and the impeller radius. Thus the denominator in equation {1} measures the dynamic head of the fluid leaving the impeller whereas the numerator measures the static head. The ratio of the two is a measure of how well the pump converts the impeller's kinetic energy into pressure.

Ideal conditions only apply when the fluid enters the pump without axial or tangential velocity components and when the fluid leaves the impeller without radial or axial velocity components. To account for non ideal conditions it is useful and instructive to relate the head coefficient to a dimensionless value of the rate of flow sustained:

$$C_Q = \frac{Q}{\omega D^3} \qquad \{2\}.$$

Where Q is the volumetric rate of flow. The denominator in equation {2} is proportional to the volume swept by the impeller per revolution. Therefore the flow coefficient $C_Q$ relates the flowrate through the pump to the pump size and speed.

It is often assumed that there is a quadratic relationship between the head coefficient and the flow coefficient:

$$C_H = a + bC_Q - cC_Q^2 \qquad \{3\},$$

where the coefficients a, b and c are all positive. Note that this relation is purely empirical. There is absolutely no hydraulic pump theory backing it up. Theory only stipulates a relation between the head and the flow coefficient but theory does not predict the shape of such a relation. The occurrence of a constant offset (a) in the empirical relation equation {3} may be interpreted as the pressure a pump can hold at zero flow. Physically, of course, this is not realizable as it would stipulate a pump which completely seals the outlet from the inlet without any clearances. Such a pump would not be practical because of the mechanical friction that the impeller would impart on the pump casing.

The hydraulic power generated by the pump is simply the product of the rate of flow and the pressure differential created. By comparing this to the power consumed by the (electric) motor driving the pump shaft an overall efficiency may be defined as:

$$\eta = \frac{\Delta p Q}{VI \cos\varphi} \qquad \{4\}.$$

This efficiency definition assumes that the motor is a one phase motor with a power factor equal to the cosine of the phase shift between the current I and the voltage V. By using the empirical relation between the head and flow coefficient it follows that the efficiency will be a cubic in the flow coefficient:

$$\eta = pC_Q + qC_Q^2 + rC_Q^3 \qquad \{5\},$$

where it should be noted that the coefficients p, q and r are not equal to a, b and c because the efficiency is also related to the (independent) pump current. It does follow, however that the efficiency should be zero at zero flow, i.e. there is no offset constant in equation {5}.

Using the same equation for hydraulic power a dimensionless power coefficient may be defined that is independent of the pump's speed:

$$C_P = \frac{C_Q}{\sqrt{C_H}} = \frac{P}{\Delta p D^2 \sqrt{\frac{\Delta p}{\rho}}} \qquad \{6\}.$$

A dimensionless speed coefficient is easily derived from the head coefficient as:

$$C_S = \frac{1}{\sqrt{C_H}} = \frac{\omega D}{\sqrt{\frac{\Delta p}{\rho}}} \qquad \{7\}.$$

Clearly this is related to the impeller's tangential speed and the fluid velocity in the pump outlet.

All dimensionless quantities so far defined are related in some manner to the size of the pump expressed in terms of the impeller diameter D. A specific speed $N_S$ may be defined as:

$$N_S = \frac{C_H{}^3}{C_Q{}^2} = \frac{\Delta p^3}{\rho^3 \omega^4 Q^2} \qquad \{8\},$$

which is now a number that for geometrically similar pumps will be the same and will be constant at the maximum efficiency point.

It follows that the power and speed coefficient are related as:

$$C_P = u + w C_S \qquad \{9\}.$$

Whereas the specific speed is related to the speed coefficient as:

$$N_S = x + \frac{y}{C_S{}^4} \qquad \{10\}.$$

Note that it is an error to assume that the offset constants in equation {9} and in equation {10}, u and x respectively, are zero.

## 2.2. The Best Efficiency Point (BEP).

The maximum efficiency of a pump may be calculated from equation {5} once the coefficients p, q and r have been determined by e.g. curve fitting of actual pump data. In terms of these coefficients the flow coefficient at the Best Efficiency Point (BEP) equals:

$$C_{Q,BEP} = \frac{-q - \sqrt{q^2 - 3pr}}{p} \qquad \{11\}.$$

The corresponding quantities for the head coefficient, the speed coefficient, the power coefficient and the specific speed all at the BEP can now be easily derived:

$$C_{H,BEP} = a + b C_{Q,BEP} - c C_{Q,BEP} \qquad \{12\},$$

$$\eta_{BEP} = p C_{Q,BEP} + q C_{Q,BEP}{}^2 + r C_{Q,BEP}{}^3 \qquad \{13\},$$

$$C_{P,BEP} = \frac{C_{Q,BEP}}{\sqrt{C_{H,BEP}}} \qquad \{14\},$$

$$C_{S,BEP} = \frac{1}{\sqrt{C_{H,BEP}}} \qquad \{15\},$$

$$N_{S,BEP} = \frac{C_{H,BEP}^{3}}{C_{Q,BEP}^{2}} \qquad \{16\}.$$

Calculating the power coefficient, speed coefficient and specific speed this way should result in points that are coincident with the regression lines as defined by equation {9} and equation {10}.

Because of changing operational load on a pump, the pump is not always (almost never) running at its BEP; and, therefore, the present invention may be implemented so as to extrapolate information related to the performance of the pump to the BEP when required, thus providing an efficiency measure at a common point making a comparison of efficiencies over time practical.

## 3. PUMP DATA CONSISTENCY.

The Cyclone Feed Pump (CFP) data set consists of data retrieved from an OSI PI data historian. The following was retrieved for a period of about 1 year for two pumps. The data is delivered in Excel spread sheets and is distributed over several workbook each having several tab sheets. A small routine in VBA serves to consolidate all data per pump in a single text file.

Table 1: **Pump data items.**

| Item | Unit | Mnemonic | Range |
|---|---|---|---|
| Flowrate of pump | gpm | f | 0 - 20000 |
| Pressure of battery | psi | p | 0 - 15 |
| Density of slurry (by weight) | % | d | -20 - 100 |
| Oversized material | | o | 0 - 50 |
| Speed of pump motor | rpm | s | 200 - 400 |
| Amperage of pump motor | A | a | 200 - 1500 |
| Level in sump tank | % | l | -1 - 101 |
| Number of cyclones open to flow | | c | 1 - 10 |

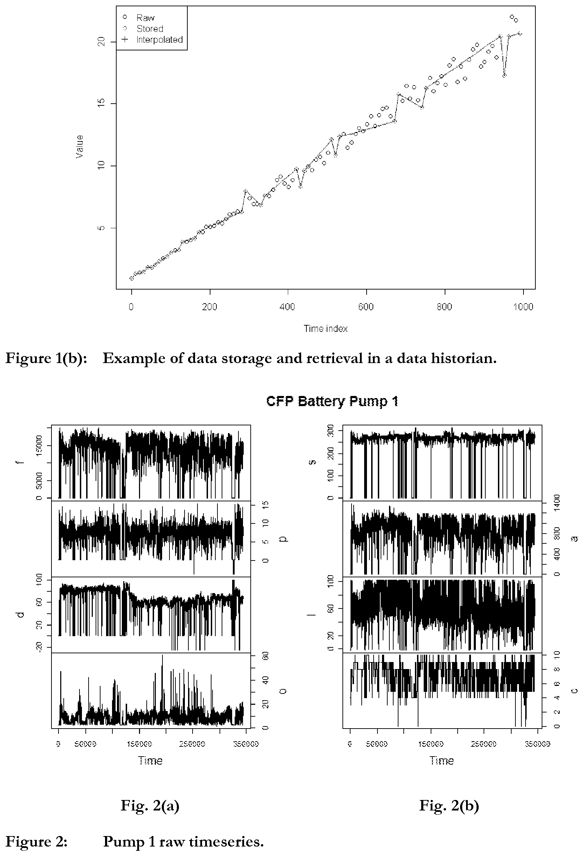

The data is time stamped every minute. It should be noted here that a data historian like PI does not normally sample data at regularly spaced intervals. Data from an instrument is saved only when the difference between the last stored point and a new point is outside a certain predefined hysteresis band. Subsequently upon a database query, when data points are required where there are no direct timestamped data available, the values are linearly interpolated. An example of the process is shown in Figure 1(b).

Obviously the process leads to a much smaller number of points to be stored. The price one pays for this is that the distribution of data is altered as all interpolated points are now dependent on each other.

In the event of a communication outage, hardware unavailability or other type of error a string is timestamped and stored. The currently known errors include the ones in the table below. Upon reading the data files such errors are replaced by missing value indicators (NA) and subsequently for further analysis the complete record (timestamped lines) with missing values is dropped from the data set.

**Table 2: Data error strings.**

| Data error | Meaning | Replaced by |
|---|---|---|
| I/OTimeout | | Missing |
| ArcOff-line | | Missing |
| ScanOff | | Missing |
| Error | | Missing |

As a result of dropping the missing values the contiguous timestamping is lost. It is not in general possible to overcome this by interpolation on non-missing points as the intervals containing missing values can be rather long.

As it will turn out, missing values are not the only issue. At times unrealistic measurement values are returned such as sump level values higher than 100% or density values below 0%. Such unphysical values may be measurement error but they may also be the result of a process condition that is not representative of normal operations. To be on the safe side, the data is filtered as per the table below.

**Table 3: Data filtering.**

| Item | Mnemonic | Low cut off | High cut off | Unit |
|---|---|---|---|---|
| Flowrate of pump | f | f>1000 | | gpm |
| Pressure of battery | p | p>1 | | psi |
| Density of slurry (by weight) | d | d>0 | | % |
| Oversized material | o | | | 1 |
| Speed of pump motor | s | s>200 | | rpm |
| Amperage of pump motor | a | a>100 | | A |
| Level in sump tank | l | l>0 | l<101 | % |
| Number of cyclones open | c | c>2 | | 1 |

In effect all conditions that are filtered are dropped from the data set. This reduces the number of available data points. For pump 1 the reduction is from 344144 points to 287622 points, which equates to some 39 days lost. Most of the missing data, some 15101 total, originates from the cyclone valves position not being known. If we exclude this, i.e. include all valid data when only the valve positions are not known, then 801 points are lost for pump 1. Pump 2, 321824 points contains 14382 missing valve position points. When filtering is applied 291855 points remain a loss of about 21 days.

### 3.1. Pump 1

Figures 2-7 shows graphs and plots in relation to a pump 1, as follows:

Figure 2 shows graphs of a raw time series for a pump 1 after reading raw data and plotting it as a time series.

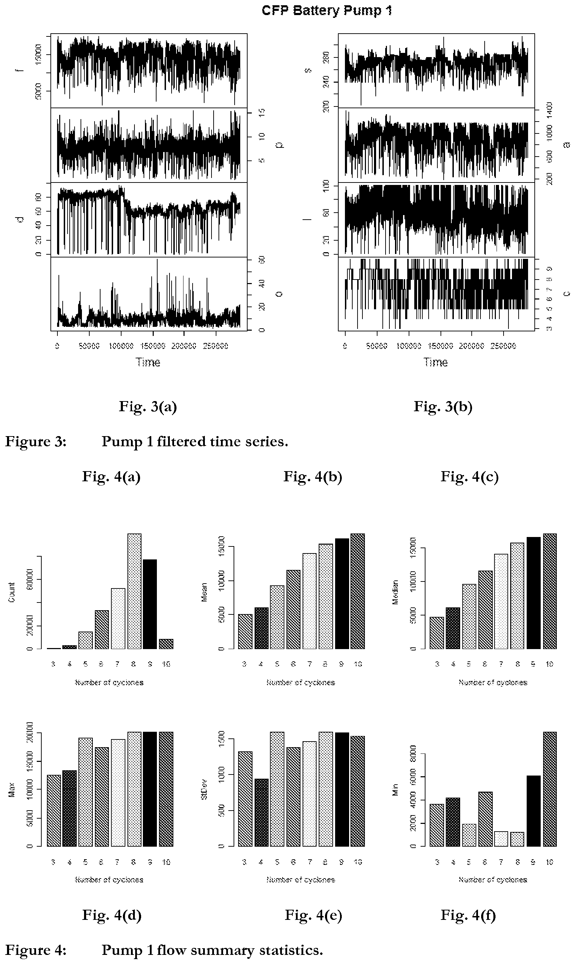

Figure 3 shows graphs of a filtered timeseries for a pump 1.

Figure 4 shows flow summary statistics for the pump 1 indicating splitting the flow data by number of cyclones shows that 8 cyclones open occurs the most.

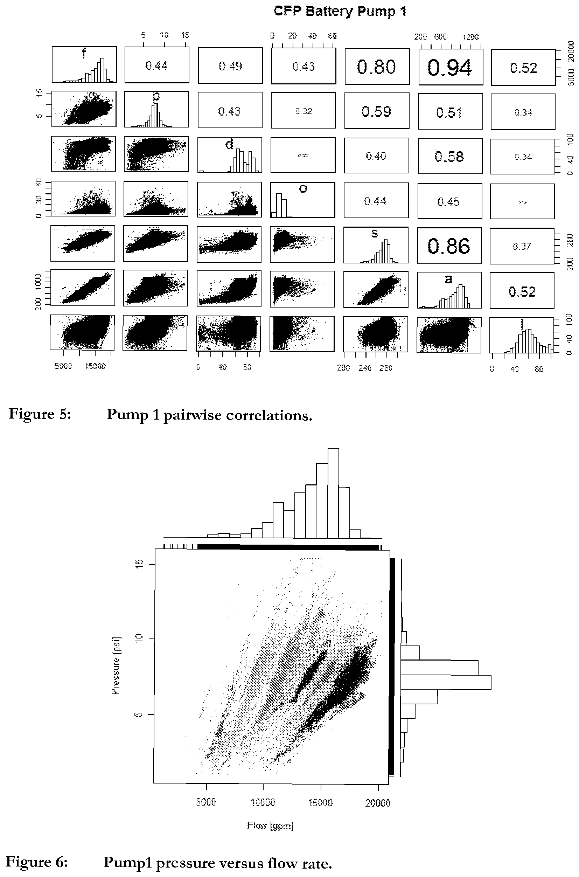

Figure 5 shows pairwise correlations for pump 1 that show high values between motor current and flow.

Figure 6 shows a cross plot of pressure versus flow rate for the pump 1, coloured by the number of cyclones, which reveals how the number of cyclones impacts the system hydraulic resistance curve.

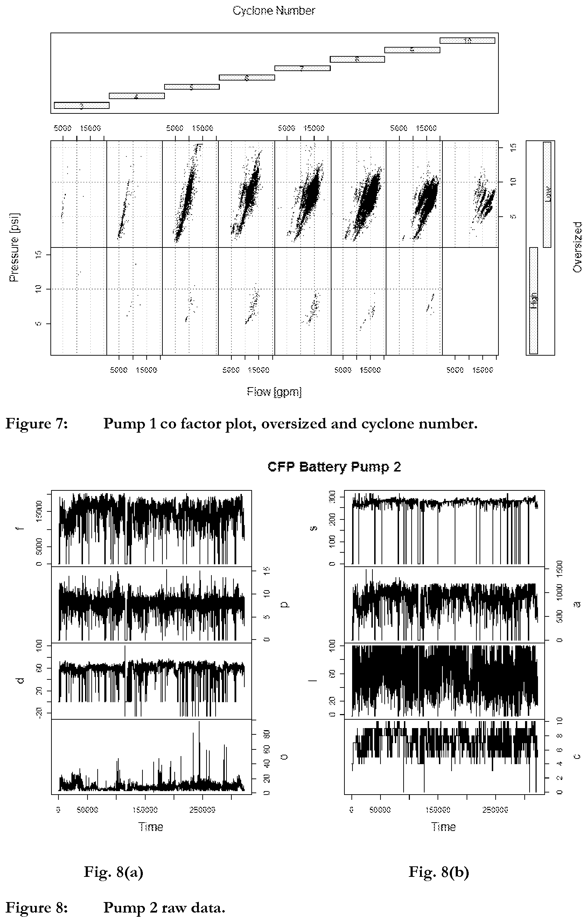

Figure 7 shows a co factor plot in relation to oversized and cyclone number, indicating that co factoring by oversized shows no oversized events with 10 cyclones operating.

### 3.2. Pump 2.

Figures 8-13 shows graphs and plots in relation to a pump 2, as follows:

Figure 8 shows graphs of a raw time series for a pump 2 after reading raw data and plotting it as a time series.

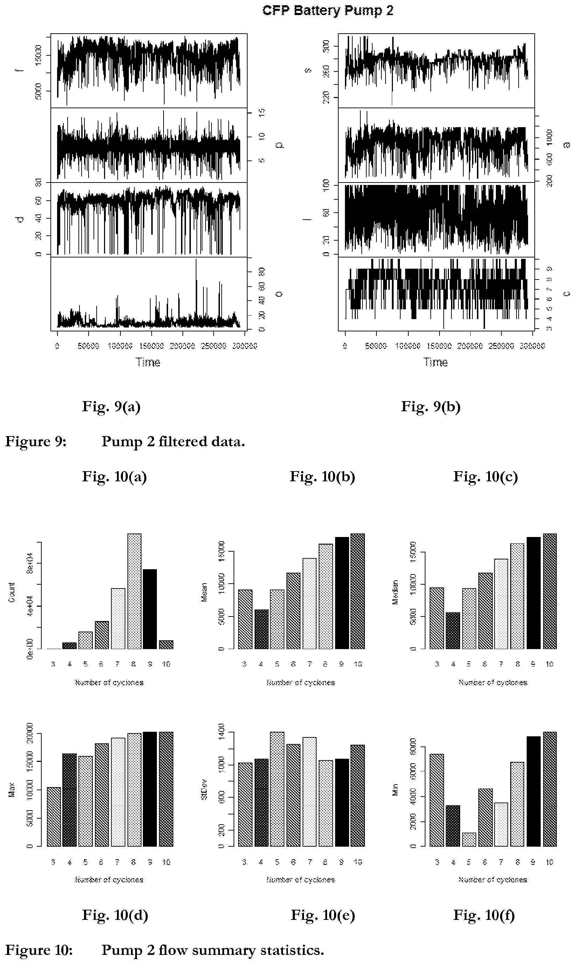

Figure 9 shows graphs of a filtered timeseries for a pump 2.

Figure 10 shows flow summary statistics for the pump 2 indicating splitting the flow data by number of cyclones shows that 8 cyclones open occurs the most and 3 probably very infrequently.

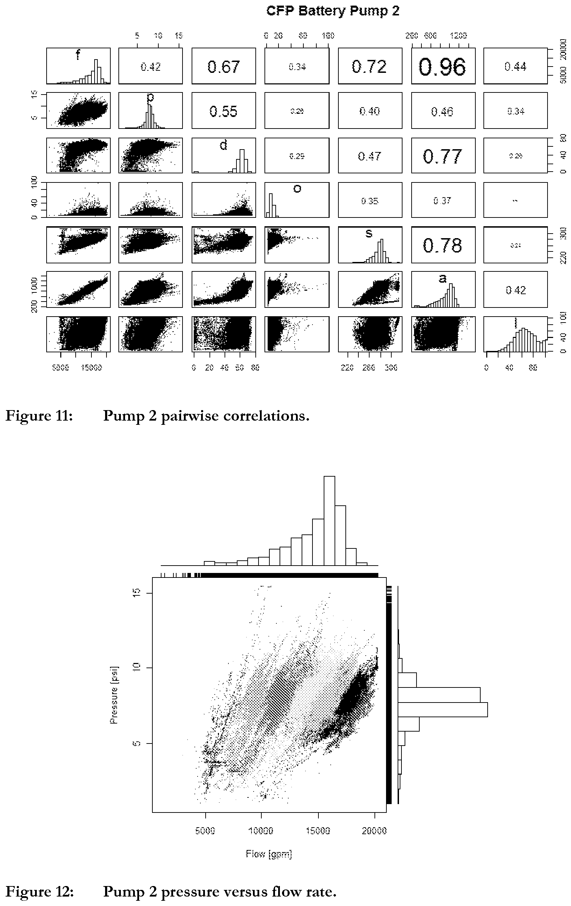

Figure 11 shows pairwise correlations for pump 2 that is similar to pump 1 in Figure 5.

Figure 12 shows a cross plot of pressure versus flow rate for the pump 2, that does not show as many mis-coloured points indicative of higher quality data for the limit switches on the cyclone gate valves.

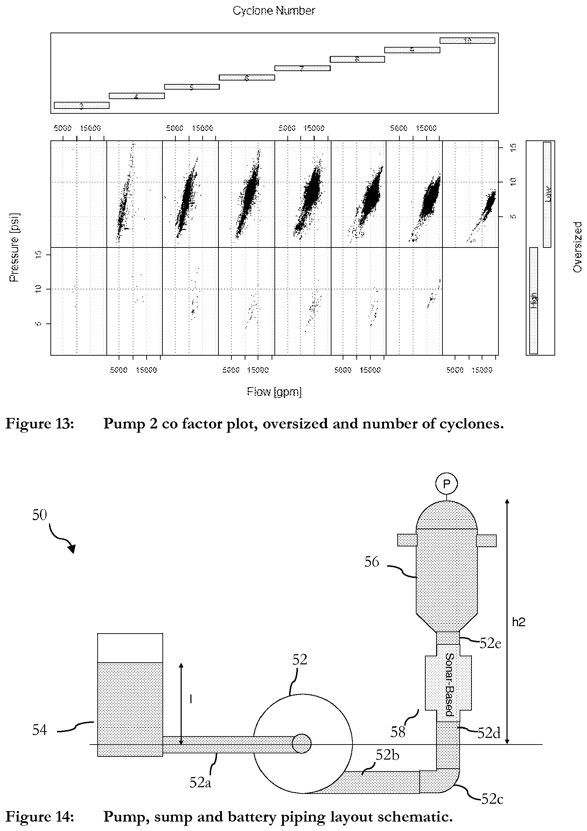

Figure 13 shows a co factor plot in relation to oversized and cyclone number, indicating that oversized is not a single cyclone caused event, it does not occur with all open.

### 4. PUMP PERFORMANCE ANALYSIS.

In order to assess the cyclone feed pump performance quantitatively by using the dependence of the efficiency of the pump on the flow coefficient, it is necessary to first calculate the differential pressure over the pump.

Figure 14 shows a schematic of a piping layout 50 having a pump 52, a sump 54 and a battery 56. The piping layout 50 also includes a sonar-based flowmeter 58 and associated piping 52a, 52b, 52c, 52d, 52e for coupling these elements together. Figure 14 does not show the cyclones that are fed from the battery 56, and only two cyclone inlet pipes (from a total of 10) are shown.

The reference level for (hydrostatic) pressure is the center line of the pump 52. All vertical distances will be measured from this level. The pressure of the cyclone battery 56 is measured at the top of the battery 56 by a pressure gauge P measuring relative to atmosphere. The sump level in the tank 54 produces a positive intake pressure also dependent on the barometric pressure. Hence the difference is not dependent on the barometric pressure.

The sonar-based flowmeter 58 in the riser to the battery 56 measures the pump's discharge flow rate. By way of example, the sonar-based flowmeter technology may include the GH-100 and/or GVF-100 meter developed by the assignee of the instant patent application. By way of example, the sonar-based flowmeter 58 is disclosed in whole or in part in United States Patent Nos. 7,165,464; 7,134,320; 7,363,800; 7,367,240; and 7,343,820,

### 4.1. Pump differential pressure

Since there is no direct pump differential pressure available, the differential pressure over the pump 52 is calculated. The pump's outlet pressure is calculated from the measured battery pressure by adding the frictional and hydrostatic pressure losses to it but neglecting acceleration-related pressure losses or losses in pipe bends. The pump's inlet pressure is calculated by subtracting frictional losses from the hydrostatic head generated by the level in the sump tank 54.

The losses in bends (e.g. element 52c) are not taken into account because the radii of the bends are not known. The acceleration-related losses are dependent on the diameter increase from the pipe line to the battery which is similarly unknown. The hydrostatic losses however are by far the largest; an estimate of the other terms shows that at maximum pump rate the losses due to acceleration-related effects, sharp bends or sump tank outflow are each less than 3% of the hydrostatic loss. Note that density has no impact on this estimate because all losses scale linearly with density.

Table 4: Hydraulic, pump and motor quantities.

| Quantity | Guess? | Symbol | Value | Unit |
|---|---|---|---|---|
| Pump impeller diameter | | D | 54 | inch |
| Carrier fluid density | Yes | $\rho_f$ | 1000 | kg/m$^3$ |
| Solids density | Yes | $\rho$ | 2750 | kg/m$^3$ |
| Carrier fluid viscosity | Yes | $U_f$ | 1 | mPa.s |

(continued)

| Quantity | Guess? | Symbol | Value | Unit |
|---|---|---|---|---|
| Vertical height to top battery | Yes | $h_2$ | 50 | ft |
| Vertical height to pump inlet | Yes | $h_1$ | 5 +10*l | ft |
| Gravitational acceleration | | g | 9.81 | m/s$^2$ |
| Flowline diameter | | $D_p$ | 24 | inch |
| Absolute flow line roughness | Yes | $\varepsilon$ | 0.4 | mm |
| Motor voltage | Yes | V | 460 | V |
| Motor power factor | Yes | cosφ | 0.7 | |
| Downstream piping length | Yes | $l_2$ | 50 | ft |
| Upstream piping length | Yes | $l_1$ | 30 | ft |
| Level in sump tank | | l | 0 - 100 | % |

Table 4 lists the assumed values for the piping layout. Note that these are mostly estimates as precise measurements are not available. Using these hydraulic quantities we can calculate the density of the slurry being pumped as:

$$\rho = \frac{\rho_f}{1 - \phi\left(1 - \frac{\rho_f}{\rho_s}\right)} \qquad \{17\}.$$

The solids volume fraction follows from the calculated slurry density by

$$\varphi = \frac{\rho - \rho_f}{\rho_s - \rho_f} \qquad \{18\}.$$

Which in turn gives the viscosity of a slurry, according to the Einstein formula:

$$\nu = \nu_f\left(1 + \frac{5}{2}\varphi\right) \qquad \{19\}.$$

The pump's inlet pressure follows as:

$$p_1 = \rho g h_1 - f \frac{1}{2}\rho V^2 \frac{\pi D_p}{\frac{1}{4}\pi D_p^{\,2}} l_1 \qquad \{20\}.$$

The pump's outlet pressure equals:

$$p_2 = p + \rho g h_2 + f \frac{1}{2}\rho V^2 \frac{\pi D_p}{\frac{1}{4}\pi D_p^{\,2}} l_2 \qquad \{21\}.$$

In both of the above the Fanning friction factor f can be calculated from the Reynolds number Re by:

$$a = \left( 2.547 \ln \left( \left( \frac{7}{\text{Re}} \right)^{0.9} + 0.27 \frac{\varepsilon}{D_p} \right) \right)^{16}$$

$$b = \left( \frac{37530}{\text{Re}} \right)^{16} \hspace{4cm} \{22\}.$$

$$f = 2 \left( \left( \frac{8}{\text{Re}} \right)^{12} + \frac{1}{(a+b)^{3/2}} \right)^{1/12}$$

This last equation was first published by S.W. Churchill, Friction factor equation spans all fluid flow regimes, Chem. Eng. 7, November 1977, p. 19. It covers both rough and smooth pipes over the entire range of Re numbers including the transition region from laminar to turbulent flow.

### 4.2. Sample results

After calculating the inlet and outlet pressure of the pump, the differential pressure is easily found. This enables the calculation of the six non dimensional quantities introduced in 2.1. The head coefficient and efficiency are plotted as a function of the flow coefficient. The power coefficient and specific speed are plotted versus the speed coefficient. This gives a four plot presenting different views of pump performance each with its own merit.

1. The $C_H$, $C_Q$ curve: This curve shows the increase/decrease of the head of the pump with increasing flow and is modelled as an inverted parabola with the top a zero or a low discharge.

2. The $\eta$, $C_Q$ curve: This curve defines the Best Efficiency Point (BEP), as the maximum of the cubic. This cubic must go to the origin.

3. The $C_P$, $C_S$ curve: The curve shows that the power coefficient is a linear function of the speed coefficient.

4. The $N_S$, $C_S$ curve: The curve shows the specific speed, whilst independent of the pump's size is inversely proportional to the fourth power of the speed.

The data set (almost a year) is broken up in periods of one day (1440 minutes). Data from two days is cross plotted and fitted as per the formulas given in section 2.1 above. The BEP is determined and plotted as a single point in all four performance graphs. The fitted, empirical lines as well as the 95% prediction intervals are also plotted. The data points are coded by the number of cyclones open to flow.
This cross plotting is repeated for each pair of days, moving forward in time by day. The determined BEP can thus be seen as an average over 2 days of data. Note that the 'days' as used here need not be consecutive calendar days because the data set had to be filtered heavily to remove non-representative and bad data.

### 4.2.1. Pump 1

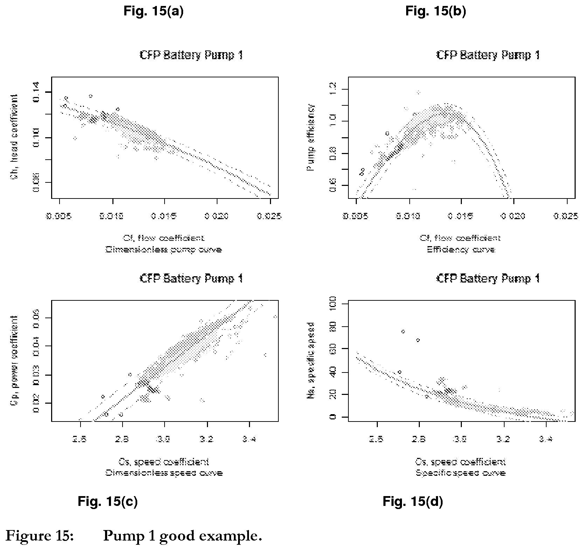

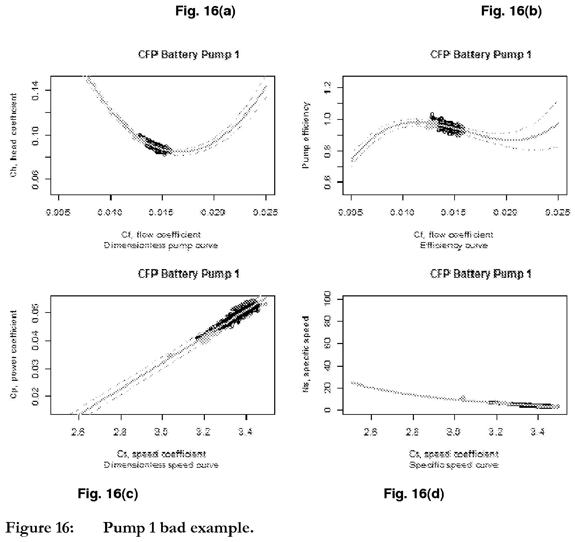

Figure 15, including Figures 15(a), (b), (c) and (d), shows graphs that provide an excellent example of the analysis. The large dots at coordinates of about 3.18, 0.34 (Fig. 15(c)) and 3.18, 5 (Fig. 15(d)) in the lower panel plots are right on top of the fitted lines showing good consistency as the dots are calculated from the BEP not from the data fit in those panels. See also the large dots at coordinates of about 0.014, 0.10 (Fig. 15(a)) and 0.014, 0.10 (Fig. 15(b)) in the upper panel plots.
Note as well that the very slight deviation from a straight line in the first, top right panel of the head versus flow coefficient does not at all mean that the efficiency curve is equally flat. In fact, the efficiency curve here has a very well defined maximum.
The data fits are carried out by a least squares method which leads to a design matrix in normal form. The fits are unconstrained however which allows the coefficients of the quadratic fit for the head curve and the cubic fit for the efficiency curve to take any value.
Under certain circumstances, notably when there is a small spread in the flow rate data, the head curve fit is then no longer found to be an inverted parabola. This is shown in Figure 16. Likewise, under such conditions it is possible for the cubic fit of the efficiency curve to return a cubic which does either not have local extrema at all or has both the minimum and the maximum on the same side of the origin, sometimes even in the same quadrant. By way of example this type of behaviour is illustrated in Figure 16.

Obviously this type of behaviour is not desired. There are two potential remedies. First one may argue that if the flow range covered is too narrow to infer curvature in the head curve the fitted model should be linear rather than quadratic and the fit attempted should be redone with a linear model if the values of the coefficients of a quadratic model indicate a non inverted parabola. This in turn implies that the efficiency curve is an inverted parabola going through origin.

A different, yet somewhat more complicated, approach would be to constrain the fits by setting up a system of equations expressing the value ranges for the fitted coefficients and solving this problem by what is known as a quadratic programming model.

Note that in Figure 16, even though the fitted models for head and efficiency are obviously not physically correct the value of the BEP is still acceptable as is evidenced by the proximity of the BEP point to the (much) simpler fits in the power and specific speed curves. See the large dots at coordinates of about 0.011, 0.10 (Fig. 16(a)); 0.011, 0.10 (Fig. 16(b)); 3.0, 0.034 (Fig. 16(c)); and 3.02, 10 (Fig. 16(d)).

*4.2.2. Pump 2*

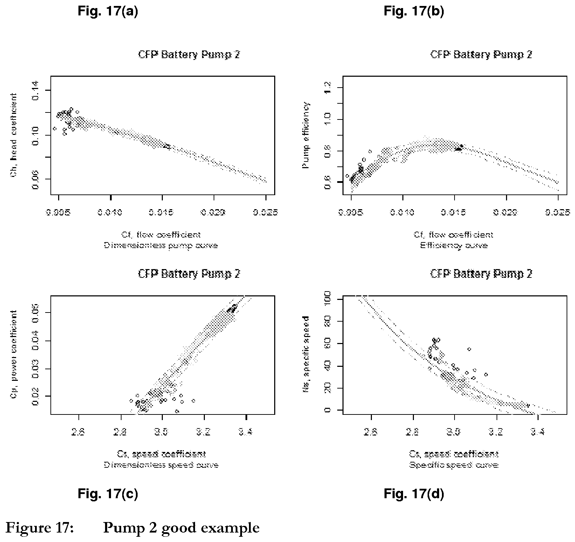

For the second pump, similar behaviour was found. An example of a good, yet very different behaviour is shown in Figure 17. Note how the 95% prediction interval lines are much closer together here than in the previous case of pump 1.

The second example of this pump shows a normal head curve; a slightly downward curving line. Yet, the efficiency curve shows an upward curving tail at high flow coefficients which is not possible in a real pump. This serves to show that it is not sufficient to rely on the head curve in order to define the order of the polynomial used for the efficiency curve. After all the efficiency curve does use a completely independent piece of data namely the motor current.

Thus the procedure outlined in the previous paragraph must be invoked for both the efficiency curve and the head curve. Even if the head curve quadratic is accepted, inspection of the coefficients of the efficiency curve is still necessary.

See also the large dots at coordinates of about 0.013, 0.10 (Fig. 17(a)); 0.013, 0.08 (Fig. 17(b)); 3.2, 0.040 (Fig. 17(c)); and 3.2, 5 (Fig. 17(d)).

**4.3. Final results.**

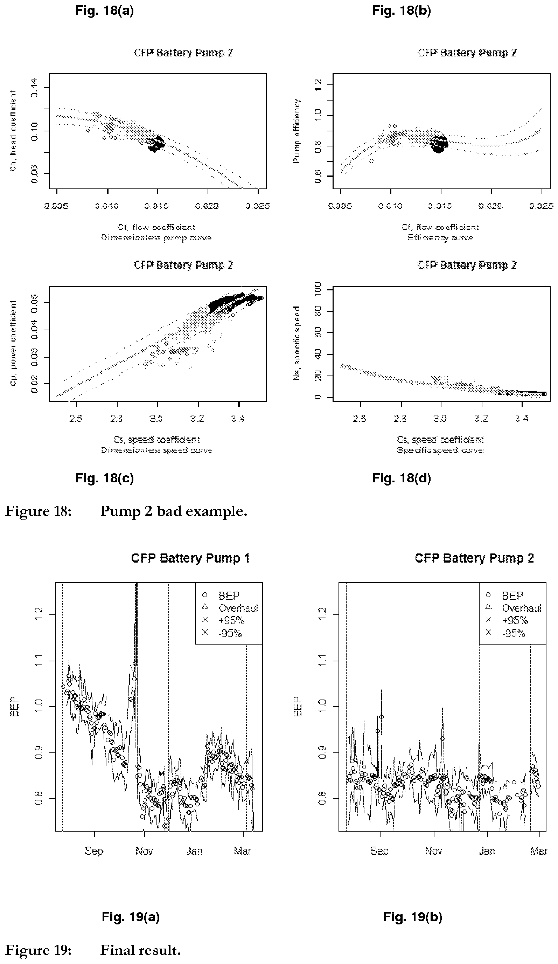

The main result of course is the value of the BEP. If one plots the BEP value versus the actual calendar day for both pumps, then one sees that for pump 1 this results in a downward trend in BEP whereas for pump 2 no clear trend is discernible. Figure 19 shows both trend plots next to each other.

Vertical red lines mark the days on which pump maintenance was carried out. The mid period line indicates an impeller replacement only, the two outer period lines represent a complete overhaul. The blue lines depict the evolution of the 95% prediction interval on the value of the BEP.

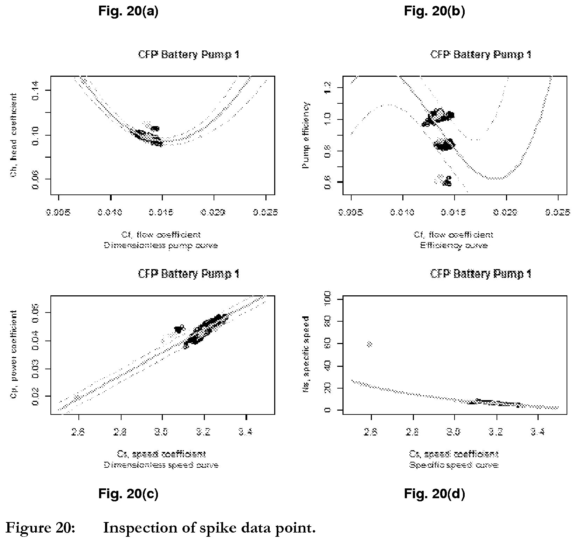

An unusual event occurs in the middle of the first period on pump 1. This event occurs on 21st October 2008 and gives an efficiency of about 1.8. The entire spike around that period, which disturbs the downward trend of the pump efficiency which is otherwise visible is suspect. The detailed analysis of the 21st is given by a four plot as given in Figure 20.

It turns out that the efficiency data is broken up in 3 distinct groups which are not or only to a much smaller extent visible in the other three graphs of the four plot. This indicates that the grouping is almost certainly caused by a wide difference in the pump's motor current. Motor current is not a factor in either of the other three quantities, head coefficient, power coefficient or specific speed. It is possible that the current probe may have been replaced around that day and was not properly recalibrated until some days later. The effect of the recalibration is then immediately visible here as three distinct groups.

Obviously, if the explanation above is correct, similar events may occur because of replacement or recalibration of the flow meter or the pressure gauge. Contrariwise, those events will be visible in all of the four plot and may thus be much harder to identify.

The main result obtained as presented in Figure 19 shows some other interesting events that call for some explanation.

For example, on pump 1 there is no clear increase in efficiency after the mid period overhaul but there is a clear increase some time later in January. This increase is again followed by a down ward trend at about (at least visually) the same rate as before. It must be understood here that the efficiency of a pump is strongly dependent on the various clearances between impeller and casing. If those clearances increase due to wear there will be increased internal recirculation inside the pump which causes the pressure and discharge flow to be less than optimum. This is in effect what the analysis presented above attempts to detect.

However, if the clearances are high to begin with then pump wear is reduced because of the lower shear rate in the fluid between casing and impeller and the efficiency will be less to begin with. It is possible that upon a pump overhaul the clearances are not set correctly or, conversely, the clearances are adjusted whilst the pump is running or stopped for a short period of time. Some pumps are fitted with clearance adjustment screws specifically designed to allow just that.

In effect this allows the operator of the pump to choose between different modes. The operator can choose to run the pump at a low rate of wear, as for instance shown in pump 2 here but a reduced efficiency. Alternatively the operator can try to achieve a high efficiency of the pump, thereby lowering the cost of electric power traded of against a higher maintenance cost because now the pump will wear faster.

## 5. CONCLUSIONS AND RECOMMENDATIONS.

Long periods of pump historical data are sufficiently consistent to use in a statistical analysis geared towards inferring pump performance changes. The data can be filtered reliably to remove outliers. Where high pairwise correlations are expected they indeed occur such as between motor current and flow rate.

It is possible to estimate the generated pressure differential over the pump by back calculation from a downstream measured pressure (battery pressure) and an upstream level measured in the tank from which the pump draws fluid (sump tank).

Having a direct measurement of pump differential pressure will increase the reliability and accuracy. Presently losses in pressure due to friction are estimated, whilst pressure losses due to bends and pipe diameter changes are neglected.

The model equations for the head and efficiency (a quadratic for an inverted parabola and a cubic passing through the origin) do in most cases describe the pump performance adequately. When the range of flow rates covered within an analysis period is too small, it may be necessary to reduce the order of the polynomials by one or to perform constrained fits.

The non-dimensional coefficients remove the effect of varying pump speed thereby allowing the analysis to proceed regardless of the pump speed. Non-overlaying data can thus only be due to measurement data that is no longer in line with past data, possibly because of gauge repair or recalibration.

In rare cases the non-dimensional analysis shows non-overlaying features in the efficiency curve. Since the non overlay occurs only in the efficiency curve the suspected gauge is the current clamp used to monitor motor current as this is the unique measurement in the efficiency.

The final result for pump 1 shows a very clear downward trend in pump efficiency from a maintenance period to the next. From thereon the efficiency varies but no clear trend with time is discernible. Mid second period however the efficiency does increase by a significant amount. This could be due to pump clearance readjustment. Thereafter the efficiency trends down again.

The final result for pump 2 does not show a downward trend in efficiency at all. A slight increase in efficiency is observed though right after the maintenance period.

The Scripts

A person skilled in the art could implement VBA scripts and R scripts that were used as part of this analysis without undue experimentation to perform the functionality described herein in relation to the present invention, including the R scripts that do the following: check data consistency; create model plots of dimensionless numbers; process in batch, suppress all model plots and write results to files; and do final post processing of results files.

Scope of the Invention

Accordingly, the invention comprises the features of construction, combination of elements, and arrangement of parts which will be exemplified in the construction hereinafter set forth.

It will thus be seen that the objects set forth above, and those made apparent from the preceding description, are efficiently attained and, since certain changes may be made in the above construction without departing from the scope of the claims, it is intended that all matter contained in the above description or shown in the accompanying drawing shall be interpreted as illustrative and not in a limiting sense.

## Claims

1.  A signal processor (12) comprising:
    one or more signal processor modules (14) configured to:

compare first signaling containing information about historical data related to the performance for one or more large diameter centrifugal slurry pumps (52) feeding a battery of cyclone separators (56), wherein the historical data related to the performance of the one or more pumps (52) comprises the discharge flow and pressure, intake level, fluid density, pump speed, and motor current; and

provide second signaling containing information about predicted maintenance needs of the one or more pumps (52) on a real time basis based at least partly on the first signalling compared,

wherein the one or more signal processor modules (14) is configured to use non-dimensional quantities to infer the performance of the one or more pumps (52) and the trending of the efficiency of the one or more pumps (52), wherein the non-dimensional quantities include the head coefficient, the flow coefficient, the efficiency, the power coefficient, the speed coefficient and the specific speed of the one or more pumps (52).

2. A signal processor according to claim 1, wherein the one or more signal processor modules (14) is configured to compare overtime the hydraulic power generated by the one or more pumps (52) and electric power consumed by a motor driving the one or more pumps (52).

3. A signal processor according to claim 1, wherein the one or more signal processor modules (14) is configured to track a ratio of hydraulic to electric power.

4. A signal processor according to claim 1, wherein the one or more signal processor modules (14) is configured to predict maintenance needs based on an algorithm that takes into account a trade-off between the cost of power consumed by a motor driving the one or more pumps (52) and the cost associated with the pump maintenance in order to substantially minimize the total cost of operating the one or more pumps (52).

5. A signal processor according to claim 1, wherein the second signaling containing information predicting maintenance needs of the one or more pumps (52) comprises information about one or more of the following: dynamically adjusting pump clearances, dynamically balancing an impeller and replacing worn parts.

6. A signal processor according to claim 1, wherein the one or more signal processor modules (14) is configured to adjust the maintenance interval to the rate of wear, or vice versa, so that the total cost of operating the one or more pumps (52) is substantially minimized.

7. A signal processor according to claim 1, wherein the one or more signal processor modules (14) is configured to receive the first signaling containing information about historical data related to the performance of the one or more pumps (52); to store the first signaling containing information about historical data related to the performance of the one or more pumps (52) in a historical data database; or both.

8. A signal processor according to claim 1, wherein the one or more signal processor modules (14) is configured to analyze the first signaling containing information about historical data related to the performance of the one or more pumps (52) using a n-day moving window.

9. A signal processor according to claim 1, wherein the one or more signal processor modules (14) is configured to receive information about maintenance performed of the one or more pumps (52), and to store associated signaling containing information about the maintenance performed in the historical data database.

10. A signal processor according to claim 1, wherein the one or more signal processor modules (14) is configured to use an algorithm that is based at least partly on prolonging the lifetime of the one or more pumps (52), increasing the efficiency of the one or more pumps (52), or both.

11. A signal processor according to claim 1, wherein the one or more signal processor modules (14) is configured to predict maintenance needs based at least partly on an algorithm that takes into account that the fact that maximum efficiency of the one or more pumps (52) may only be achieved by reducing the respective pump's internal clearances and thereby making the internal pressure seal of the respective pump tighter, and that by doing so the shear rates in the clearance spaces increase and thus the wall friction will increase as well leading to increased wear when the pumped fluids contain abrasive particulate material.

12. A signal processor according to claim 1, wherein the one or more signal processor modules (14) is configured to extrapolate information related to the performance of the one or more pumps (52) to a Best Efficiency Point, thus providing an efficiency measure at a common point.

**13.** A method comprising:

comparing first signaling containing information about historical data related to the performance for one or more large diameter centrifugal slurry pumps (52) feeding a battery of cyclone separators (56), wherein the historical data related to the performance of the one or more pumps (52) comprises the discharge flow and pressure, intake level, fluid density, pump speed, and motor current; and
providing second signaling containing information about predicted maintenance needs of the one or more pumps (52) on a real time basis based at least partly on the first signaling compared, including using non-dimensional quantities to infer the performance of the one or more pumps (52) and the trending of the efficiency of the one or more pumps (52), wherein the non-dimensional quantities include the head coefficient, the flow coefficient, the efficiency, the power coefficient, the speed coefficient and the specific speed of the one or more pumps (52).

**Patentansprüche**

**1.** Signalprozessor (12), aufweisend:
ein oder mehrere Signalprozessormodule (14), die ausgebildet sind zum:

Vergleichen einer ersten Signalgabe, die Information über historische Daten bezüglich der Leistung einer oder mehrerer Zentrifugal-Aufschlämmungspumpen (52) mit großem Durchmesser enthält, die eine Batterie von Zyklonabscheidern (56) speisen, wobei die historischen Daten bezüglich der Leistung der einen oder mehreren Pumpen (52) die Fördermenge und den Förderdruck, das Ansaugniveau, die Fluiddichte, die Pumpendrehzahl und den Motorstrom beinhalten; und
Bereitstellen einer zweiten Signalgabe, die Information über den voraussichtlichen Wartungsbedarf der einen oder mehreren Pumpen (52) auf Echtzeitbasis enthält, zumindest teilweise auf der Basis der ersten, verglichenen Signalgabe,
wobei das eine oder die mehreren Signalprozessormodule (14) dazu ausgebildet sind, dimensionslose Größen verwenden, um auf die Leistung der einen oder mehreren Pumpen (52) und die Tendenz des Wirkungsgrads der einen oder mehreren Pumpen (52) zu schließen, wobei die dimensionslosen Größen den Kopfkoeffizienten, den Strömungskoeffizienten, den Wirkungsgrad, den Leistungskoeffizienten, den Drehzahlkoeffizienten und die spezifische Drehzahl der einen oder mehreren Pumpen (52) beinhalten.

**2.** Signalprozessor nach Anspruch 1,
wobei das eine oder die mehreren Signalprozessormodule (14) dazu ausgebildet sind, die von der einen oder den mehreren Pumpen (52) erzeugte hydraulische Leistung und die elektrische Leistung, die von einem die eine oder die mehreren Pumpen (52) antreibenden Motor verbraucht wird, über die Zeit zu vergleichen.

**3.** Signalprozessor nach Anspruch 1,
wobei das eine oder die mehreren Signalprozessormodule (14) dazu ausgebildet sind, ein Verhältnis von hydraulischer zu elektrischer Leistung zu verfolgen.

**4.** Signalprozessor nach Anspruch 1,
wobei das eine oder die mehreren Signalprozessormodule (14) dazu ausgebildet sind, den Wartungsbedarf auf der Basis eines Algorithmus vorhersagen, der einen Kompromiss zwischen den Kosten für die Energie, die von einem die eine oder die mehreren Pumpen (52) antreibenden Motor verbraucht wird, und den mit der Pumpenwartung verbundenen Kosten berücksichtigt, um die Gesamtkosten für den Betrieb der einen oder der mehreren Pumpen (52) im Wesentlichen zu minimieren.

**5.** Signalprozessor nach Anspruch 1,
wobei die zweite Signalgabe, die Information enthält, die den Wartungsbedarf der einen oder mehreren Pumpen (52) vorhersagt, Information über eines oder mehrere der folgenden Elemente umfasst: dynamisches Einstellen von Pumpenfreiräumen, dynamisches Auswuchten eines Laufrads und Ersetzen von verschlissenen Teilen.

**6.** Signalprozessor nach Anspruch 1,
wobei das eine oder die mehreren Signalprozessormodule (14) dazu ausgebildet sind, das Wartungsintervall an die Verschleißrate oder umgekehrt anzupassen, so dass die Gesamtkosten für den Betrieb der einen oder der mehreren Pumpen (52) im Wesentlichen minimiert sind.

**7.** Signalprozessor nach Anspruch 1,
wobei das eine oder die mehreren Signalprozessormodule (14) dazu ausgebildet sind, die erste Signalgabe zu empfangen, die Information über historische Daten bezüglich der Leistung der einen oder mehreren Pumpen (52) enthält; die erste Signalgabe, die Information über historische Daten bezüglich der Leistung der einen oder mehreren Pumpen (52) enthält, in einer Datenbank für historische Daten zu speichern; oder beides.

**8.** Signalprozessor nach Anspruch 1,
wobei das eine oder die mehreren Signalprozessormodule (14) dazu ausgebildet sind, die erste Signalgabe, die Information über historische Daten bezüglich der Leistung der einen oder mehreren Pumpen (52) enthält, unter Verwendung eines sich an n Tagen bewegenden Fensters zu analysieren.

**9.** Signalprozessor nach Anspruch 1,
wobei das eine oder die mehreren Signalprozessormodule (14) dazu ausgebildet sind, Information über die an der einen oder den mehreren Pumpen (52) ausgeführte Wartung zu empfangen und eine zugehörige Signalgabe, die Information über die ausgeführte Wartung enthält, in der Datenbank für historische Daten zu speichern.

**10.** Signalprozessor nach Anspruch 1,
wobei das eine oder die mehreren Signalprozessormodule (14) dazu ausgebildet sind, einen Algorithmus zu verwenden, der zumindest teilweise auf einer Verlängerung der Lebensdauer der einen oder mehreren Pumpen (52), einer Erhöhung des Wirkungsgrads der einen oder mehreren Pumpen (52) oder beidem basiert.

**11.** Signalprozessor nach Anspruch 1,
wobei der eine oder die mehreren Signalprozessormodule (14) dazu ausgebildet sind, den Wartungsbedarf zumindest teilweise auf der Basis eines Algorithmus vorherzusagen, der die Tatsache berücksichtigt, dass der maximale Wirkungsgrad der einen oder mehreren Pumpen (52) nur durch Reduzieren der internen Freiräume der jeweiligen Pumpe erreicht werden kann und dadurch die Innendruckdichtung der jeweiligen Pumpe enger gemacht wird, und dass dadurch die Scherraten in den Freiräumen ansteigen und somit die Wandreibung ebenfalls größer wird, was zu erhöhtem Verschleiß führt, wenn die gepumpten Fluide abrasives, teilchenförmiges Material enthalten.

**12.** Signalprozessor nach Anspruch 1,
wobei der eine oder die mehreren Signalprozessormodule (14) dazu ausgebildet sind, Information bezüglich der Leistung der einen oder mehreren Pumpen (52) auf einen Punkt mit dem besten Wirkungsgrad zu extrapolieren, um dadurch ein Maß für den Wirkungsgrad an einem gemeinsamen Punkt bereitzustellen.

**13.** Verfahren, das folgende Schritte aufweist:

Vergleichen einer ersten Signalgabe, die Information über historische Daten bezüglich der Leistung von einer oder mehreren Zentrifugal-Aufschlämmungspumpen (52) mit großem Durchmesser enthält, die eine Batterie von Zyklonabscheidern (56) speisen, wobei die historischen Daten bezüglich der Leistung der einen oder mehreren Pumpen (52) die Fördermenge und den Förderdruck, das Ansaugniveau, die Fluiddichte, die Pumpendrehzahl und den Motorstrom beinhalten; und
Bereitstellen einer zweiten Signalgabe, die Information über den voraussichtlichen Wartungsbedarf der einen oder mehreren Pumpen (52) auf Echtzeitbasis enthält, zumindest teilweise auf der Basis der ersten, verglichenen Signalgabe, wobei dies die Verwendung von dimensionslosen Größen beinhaltet, um auf die Leistung der einen oder mehreren Pumpen (52) und die Tendenz des Wirkungsgrads der einen oder mehreren Pumpen (52) zu schließen, wobei die dimensionslosen Größen den Kopfkoeffizienten, den Strömungskoeffizienten, den Wirkungsgrad, den Leistungskoeffizienten, den Drehzahlkoeffizienten und die spezifische Drehzahl der einen oder mehreren Pumpen (52) beinhalten.

**Revendications**

**1.** Processeur de signaux (12) comprenant :
un ou plusieurs modules de processeur de signaux (14) configurés de manière à :

comparer un premier signal contenant des informations sur les données historiques de performance d'une ou plusieurs pompes à boue centrifuges de grand diamètre (52) alimentant une batterie de séparateurs cycloniques (56), sachant que les données historiques de performance de l'une ou des pompes (52) comprennent le débit et la pression de refoulement, le niveau d'admission, la densité du fluide, la rapidité de la pompe et le courant moteur ; et à

fournir un deuxième signal contenant des informations sur les besoins prédits de maintenance de l'une ou des pompes (52) en temps réel, sur la base au moins en partie du premier signal comparé,

**caractérisé en ce que** l'un ou plusieurs des modules de processeur de signaux (14) sont configurés de manière à utiliser des quantités non dimensionnelles pour déduire la performance de l'une ou des pompes (52) et la tendance de rendement de l'une ou des pompes (52), sachant que les quantités non dimensionnelles incluent le coefficient de hauteur manométrique, le coefficient de débit, le rendement, le coefficient de puissance, le coefficient de vitesse et la vitesse spécifique de l'une ou des pompes (52).

2. Processeur de signaux selon la revendication 1, **caractérisé en ce que** l'un ou plusieurs des modules de processeur de signaux (14) sont configurés de manière à comparer sur le temps la puissance hydraulique générée par l'une ou les pompes (52) et l'énergie électrique consommée par un moteur entraînant la ou les pompes (52).

3. Processeur de signaux selon la revendication 1, **caractérisé en ce que** l'un ou plusieurs des modules de processeur de signaux (14) sont configurés de manière à suivre un rapport entre la puissance hydraulique et l'énergie électrique.

4. Processeur de signaux selon la revendication 1, **caractérisé en ce que** l'un ou plusieurs des modules de processeur de signaux (14) sont configurés de manière à prédire les besoins de maintenance sur la base d'un algorithme qui prend en compte un compromis entre le coût de l'énergie consommée par un moteur entraînant la ou les pompes (52) et le coût associé à la maintenance de la pompe en vue de réduire substantiellement le coût total d'exploitation de l'une ou des pompes (52).

5. Processeur de signaux selon la revendication 1, **caractérisé en ce que** le deuxième signal contenant des informations prédisant les besoins de maintenance de l'une ou des pompes (52) comprend des informations sur l'un ou plusieurs des éléments suivants : le réglage dynamique des jeux de la/des pompes, l'équilibrage dynamique d'un impulseur et le remplacement de pièces usées.

6. Processeur de signaux selon la revendication 1, **caractérisé en ce que** l'un ou plusieurs des modules de processeur de signaux (14) sont configurés de manière à régler l'intervalle de maintenance en fonction du taux d'usure, ou inversement, de manière à ce que le coût total d'exploitation de l'une ou des pompes (52) puisse être substantiellement réduit.

7. Processeur de signaux selon la revendication 1, **caractérisé en ce que** l'un ou plusieurs des modules de processeur de signaux (14) sont configurés de manière à recevoir le premier signal contenant des informations sur les données historiques de performance de l'une ou des pompes (52) ; à enregistrer le premier signal contenant des informations sur les données historiques de performance de l'une ou des pompes (52) dans une base de données historiques ; ou les deux.

8. Processeur de signaux selon la revendication 1, **caractérisé en ce que** l'un ou plusieurs des modules de processeur de signaux (14) sont configurés de manière à analyser le premier signal contenant des informations sur les données historiques de performance de l'une ou des pompes (52) en utilisant une fenêtre mobile de n jours.

9. Processeur de signaux selon la revendication 1, **caractérisé en ce que** l'un ou plusieurs des modules de processeur de signaux (14) sont configurés de manière à recevoir des informations sur la maintenance effectuée de l'une ou des pompes (52), et à enregistrer le signal associé contenant des informations sur la maintenance effectuée dans la base de données historiques.

10. Processeur de signaux selon la revendication 1, **caractérisé en ce que** l'un ou plusieurs des modules de processeur de signaux (14) sont configurés de manière à utiliser un algorithme qui est basé au moins en partie sur la prolongation de la durée de vie de l'une ou des pompes (52), l'augmentation du rendement de l'une ou des pompes (52), ou les deux.

11. Processeur de signaux selon la revendication 1, **caractérisé en ce que** l'un ou plusieurs des modules de processeur de signaux (14) sont configurés de manière à prédire les besoins de maintenance sur la base au moins en partie d'un algorithme qui prend en compte le fait que le rendement maximum de l'une ou des pompes (52) ne peut être atteint que par une réduction des jeux internes de la pompe en question, ce qui rend le joint de pression interne de la pompe en question plus hermétique, et que ce faisant, les taux de cisaillement dans les espaces libres augmentent, ce qui entraîne également une augmentation du frottement contre les parois, entraînant une usure accrue lorsque les fluides pompés contiennent des matières particulaires abrasives.

**12.** Processeur de signaux selon la revendication 1, **caractérisé en ce que** l'un ou plusieurs des modules de processeur de signaux (14) sont configurés de manière à extrapoler le point de rendement maximal à partir des informations de performance de l'une ou des pompes (52), fournissant ainsi une mesure de rendement à un point commun.

**13.** Procédé comprenant :

la comparaison d'un premier signal contenant des informations sur les données historiques de performance d'une ou plusieurs pompes à boue centrifuges de grand diamètre (52) alimentant une batterie de séparateurs cycloniques (56), sachant que les données historiques de performance de l'une ou des pompes (52) comprennent le débit et la pression de refoulement, le niveau d'admission, la densité du fluide, la rapidité de la pompe et le courant moteur ; et

la fourniture d'un deuxième signal contenant des informations sur les besoins prédits de maintenance de l'une ou des pompes (52) en temps réel, sur la base au moins en partie du premier signal comparé, incluant l'utilisation de quantités non dimensionnelles pour déduire la performance de l'une ou des pompes (52) et la tendance de rendement de l'une ou des pompes (52), sachant que les quantités non dimensionnelles incluent le coefficient de hauteur manométrique, le coefficient de débit, le rendement, le coefficient de puissance, le coefficient de vitesse et la vitesse spécifique de l'une ou des pompes (52).

12

14

16

Figure 1(a)

**Figure 1(b):   Example of data storage and retrieval in a data historian.**

CFP Battery Pump 1

Fig. 2(a)

Fig. 2(b)

**Figure 2:      Pump 1 raw timeseries.**

CFP Battery Pump 1

Fig. 3(a)

Fig. 3(b)

Figure 3:      Pump 1 filtered time series.

Fig. 4(a)                    Fig. 4(b)                    Fig. 4(c)

Fig. 4(d)                    Fig. 4(e)                    Fig. 4(f)

Figure 4:      Pump 1 flow summary statistics.

**CFP Battery Pump 1**

Figure 5:      Pump 1 pairwise correlations.

Figure 6:      Pump1 pressure versus flow rate.

Figure 7:     Pump 1 co factor plot, oversized and cyclone number.

**CFP Battery Pump 2**

Fig. 8(a)                               Fig. 8(b)

Figure 8:     Pump 2 raw data.

CFP Battery Pump 2

Fig. 9(a)

Fig. 9(b)

Figure 9:    Pump 2 filtered data.

Fig. 10(a)              Fig. 10(b)              Fig. 10(c)

Fig. 10(d)              Fig. 10(e)              Fig. 10(f)

Figure 10:    Pump 2 flow summary statistics.

27

Figure 11:     Pump 2 pairwise correlations.

Figure 12:     Pump 2 pressure versus flow rate.

**Figure 13:** Pump 2 co factor plot, oversized and number of cyclones.

**Figure 14:** Pump, sump and battery piping layout schematic.

**Fig. 15(a)**                                         **Fig. 15(b)**

**Fig. 15(c)**                                         **Fig. 15(d)**

Figure 15:      Pump 1 good example.

**Fig. 16(a)**

**Fig. 16(b)**

**Fig. 16(c)**

**Fig. 16(d)**

Figure 16:     Pump 1 bad example.

**Fig. 17(a)**

**Fig. 17(b)**

**Fig. 17(c)**

**Fig. 17(d)**

Figure 17:    Pump 2 good example

**Fig. 18(a)**

**Fig. 18(b)**

**Fig. 18(c)**

**Fig. 18(d)**

Figure 18: Pump 2 bad example.

**Fig. 19(a)**

**Fig. 19(b)**

Figure 19: Final result.

**Fig. 20(a)**

**Fig. 20(b)**

**Fig. 20(c)**

**Fig. 20(d)**

Figure 20:    Inspection of spike data point.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6882960 B2
- US 6735630 B1
- EP 1589391 A2
- WO 2006099622 A2
- WO 2006039743 A1
- US 7165464 B
- US 7134320 B
- US 7363800 B
- US 7367240 B
- US 7343820 B

**Non-patent literature cited in the description**

- **A.C. WALSHAW ; D.A. JOBSON.** Mechanics of Fluids. Longmans, 1967
- **S.W. CHURCHILL.** Friction factor equation spans all fluid flow regimes. *Chem. Eng.,* November 1977, vol. 7, 19